# EUROPEAN PATENT APPLICATION

(11) **EP 4 789 751 A1**
(43) Date of publication of application: **12.08.2026**
(21) Application number: 24874834.5
(22) Date of filing: 16.07.2024
(51) Int. Cl.: B01D 53/30, H02B 13/055

(54) **GAS SEPARATION SYSTEM ENCLOSURE**

(30) Priority: 06.10.2023 KR 20230133663
(71) Applicant: LS Electric Co., Ltd., Anyang-si, Gyeonggi-do 14119 (KR)
(72) Inventor: KIM, Han Gil, Anyang-si, Gyeonggi-do 14118 (KR); KIM, Sang Eon, Anyang-si, Gyeonggi-do 14118 (KR); JUNG, Jongchul, Anyang-si, Gyeonggi-do 14118 (KR); SHIN, Young Sung, Anyang-si, Gyeonggi-do 14118 (KR); KIM, Yong Gi, Anyang-si, Gyeonggi-do 14118 (KR); CHO, Wook Dong, Anyang-si, Gyeonggi-do 14118 (KR)
(74) Representative: K&L Gates LLP
(86) International application number: PCT/KR2024/010185
(87) International publication number: WO 2025/075275

(57) **Abstract**

A container of a gas separating system is disclosed. A container of a gas separating system according to an aspect of the present disclosure may include an outer frame having a space formed thereinside; a weight sensing unit accommodated in the outer frame to be drawable; and a nozzle coupling unit arranged in the outer frame and fluidically coupled to each of an outside and the space of the outer frame.

## Description

### TECHNICAL FIELD

The present disclosure relates to a container of a gas separating system, and more particularly, to a container of a gas separating system, which has a structure that stably accommodates the gas separating system and facilitates easy operation.

### BACKGROUND

A gas insulated switchgear (GIS) is a safety device installed in high-voltage power systems such as power plants or substations. The gas insulated switchgear performs the switching of load current under normal operating conditions. In addition, the gas insulated switchgear is provided to protect the power systems, by opening and closing lines even in abnormal conditions such as fault current or short-circuit current.

The gas insulated switchgear is provided with an insulating gas. The insulating gas is provided in the gas insulated switchgear and performs an insulating function, thereby improving the operational reliability of the gas insulated switchgear.

Traditional gas insulated switchgears are provided with sulfur hexafluoride (SF₆) as an insulating gas. The sulfur hexafluoride can be produced at low cost, has excellent insulation properties, has a high extinguishingability of generated arcs, and has a fast insulation recovery rate, and thus, it is widely used as an insulating gas.

However, the sulfur hexafluoride corresponds to a greenhouse gas that causes global warming. Recently, as interest in and regulations on environmental protection have increased, a consensus has been formed on reducing greenhouse gases, especially in developed countries, and research is being conducted to develop an insulating gas that can replace the sulfur hexafluoride.

For example, NOVEC 1230(C₆F₁₂O) developed by 3M has been developed and is being used to replace the sulfur hexafluoride. However, the insulating gases developed to date require excessive costs to secure insulating performance equivalent to that of the sulfur hexafluoride.

Meanwhile, the insulating gas also has the character of a consumer product. That is, as the use of a gas insulated switchgear continues, the insulating gas should be periodically replaced and recharged. Accordingly, expensive insulating gas should be continuously supplied to the gas insulated switchgear, which places a great burden on operators of the power system and consumers supplied with power.

To this end, devices for extracting insulating gas from discharged gas have been developed. However, presuming that such devices are fixedly installed at specific positions, it is not easy to move the devices to other places if necessary. In addition, members for accommodating the devices require additional actions for accommodating components for increasing or decreasing temperature or pressure and thermally insulating the devices from the outside.

Korean Patent Publication No. 10-2030-0074658 discloses a method and a system for transporting methane gas so as to extract the gas, convert the gas into clathrate, and use the clathrate. Specifically, a method and a system for extracting a desired gas from natural gas supplied from the outside, converting the gas, and transporting the converted gas are disclosed.

However, the method and system for transporting the gas, which are disclosed in the prior document, presumes that the system is fixedly installed at a specific position. That is, since the position at which the natural gas is provided is limited, the prior document does not provide a plan for easily moving the system installed at the specific position to another position.

Japanese Registered Patent No. 6234494 discloses a liquid dispensing system having gas removal and detection capability. Specifically, a gas separating system having a pressure distribution device connected to a fluid entrance to remove gas from liquid is disclosed.

However, the gas separating device disclosed in the prior document does not also provide a configuration associated with a separate container for accommodating the gas separating device. The prior document discloses only a configuration for connecting the gas separating device to an outer container, and does not provide a configuration associated with a container for moving or accommodating a liquid dispensing system.

Korean Patent Publication No. 10-2023-0074658 (May 31, 2023)

Japanese Registered Patent No. 6234494 (November 2, 2017)

### SUMMARY

An embodiment of the present disclosure provides a container of a gas separating system, which has a structure capable of being easily moved.

Another embodiment of the present disclosure provides a container of a gas separating system, which has a structure capable of thermally insulating the gas separating system accommodated therein from the outside.

Still another embodiment of the present disclosure provides a container of a gas separating system, which has a structure in which the gas separating system accommodated therein can be stably operated.

Still another embodiment of the present disclosure provides a container of a gas separating system, which has a structure capable of easily controlling the gas separating system accommodated therein.

Still another embodiment of the present disclosure provides a container of a gas separating system, which has a structure capable of facilitating fluidical connection to the outside.

Still another embodiment of the present disclosure provides a container of a gas separating system, which has a structure with a beautiful appearance.

Objectives of the present disclosure are not limited to the above-described objectives, and other objectives of the present disclosure, which are not mentioned, will be apparently understood by those skilled in the art from the following description.

According to an embodiment of the present disclosure, a container of a gas separating system, includes an outer frame having a space formed thereinside; a weight sensing unit accommodated in the outer frame to be drawable; and a nozzle coupling unit arranged in the outer frame and fluidically connected to each of an outside and the space of the outer frame.

The outer frame may include a lower outer frame constituting one side of a height direction thereof, accommodating the weight sensing unit to be drawable, and formed to have a length of one direction thereof and a width of another direction thereof. The weight sensing unit may be located at one side of the one direction of the lower outer frame and may be accommodated in the lower outer frame to be drawable along the one direction.

In addition, the outer frame may include a pull-up coupling unit located in the another direction of the lower outer frame.

The pull-up coupling unit may include a pull-up member coupling space formed inside the lower outer frame along the another direction to penetrate the lower outer frame; and a pull-up cover covering the pull-up member coupling space and removably coupled to the lower outer frame.

In addition, the outer frame may include a handle member located in the one direction.

The container of the gas separating system may include a wheel member coupled to the lower outer frame and configured to be movable.

In addition, the weight sensing unit may be hinge-fitted to the outer frame, to be movably provided between a first position adjacent to the outer frame and a second position more distant from the outer frame than the first position.

The container of the gas separating system may include a control information input unit coupled to the outer frame and configured to receive a control signal from the outside. The control information input unit may include a control panel receiving the control signal from the outside; and an emergency button located adjacent to the control panel and receiving a control signal for stopping.

In addition, the emergency button may be formed to further protrude than the control panel, and the control information input unit may include an emergency housing extending while surrounding the emergency button at a radial outer side.

The nozzle coupling unit may include a nozzle coupling space formed to be recessed as compared with an outer surface of the outer frame; a nozzle member extending in a length direction of the outer frame such that one end portion thereof is located in the nozzle coupling space and an opposite end portion thereof is located inside the outer frame; and a nozzle coupling cover removably coupled to the outer frame to be configured to open or close the nozzle coupling space.

In addition, the weight sensing unit may include a scale support frame accommodated in the lower outer frame; and a scale member movably coupled to the scale support frame, supporting a container accommodating a mixed gas to be separated, and configured to sense a weight of the container.

The scale member may be movably coupled to the scale support frame along the length direction of the outer frame, and the weight sensing unit may include a support member located at one end portion of a length direction of the scale member, to be configured to support the one end portion of the drawn scale member.

In addition, the container of the gas separating system may include an inner frame located inside the outer frame and configured to partition the space of the outer frame.

The inner frame may include an inner frame partition wall partially partitioning the space of the outer frame.

In addition, the inner frame may include a first inner frame partition wall partially partitioning the space of the outer frame at one side; a second inner frame partition wall located to be spaced apart from the first inner frame partition wall and partially partitioning the space of the outer frame at another side; a first frame space defined by being surrounded by the first inner frame partition wall, and accommodating any one nozzle coupling unit among a plurality of nozzle coupling units; a second frame space defined by being surrounded by the first inner frame partition wall and the second inner frame partition wall, and accommodating another nozzle coupling unit among the plurality of nozzle coupling units; and a third frame space defined by being surrounded by the second inner frame partition wall.

The second frame space may accommodate at least one of a pump, a membrane member, and a collection cylinder, which are provided in the gas separating system, and the third frame space may accommodate a chiller provided in the gas separating system.

In addition, the container of the gas separating system may include a collection weight sensing unit located in the first frame space, supporting, at a lower side, a collection tank collecting a gas separated from the mixed gas to be separated, and configured to sense a weight of the gas collected in the collection tank.

The inner frame partition wall may be made of a heat insulating material.

According to the above configuration, the container of the gas separating system according to the embodiment of the present disclosure can be easily moved.

In addition, according to the above configuration, the container of the gas separating system according to the embodiment of the present disclosure can thermally insulate the gas separating system accommodated therein from the outside.

In addition, according to the above configuration, the container of the gas separating system according to the embodiment of the present disclosure can stably operate the gas separating system accommodated therein.

In addition, according to the above configuration, the container of the gas separating system according to the embodiment of the present disclosure can easily control the gas separating system accommodated therein.

In addition, according to the above configuration, the container of the gas separating system according to the embodiment of the present disclosure can easily form fluidical connection to the outside.

In addition, according to the above configuration, the container of the gas separating system according to the embodiment of the present disclosure can have a beautiful appearance.

The effects of the present disclosure are not limited to the effects mentioned above. Rather, it is to be understood that the effects of the present disclosure include all the effects deducible from the description below.

### BRIEF DESCRIPTION OF THE DRAWINGS

FIG. 1 is a perspective view showing a container of a gas separating system according to an embodiment of the present disclosure.
FIG. 2 is a front view showing the container of the gas separating system in FIG. 1.
FIG. 3 is a left side view showing the container of the gas separating system in FIG. 1.
FIG. 4 is a right side view showing the container of the gas separating system in FIG. 1.
FIG. 5 is a rear view showing the container of the gas separating system in FIG. 1.
FIG. 6 is a bottom view showing the container of the gas separating system in FIG. 1.
FIG. 7 is a front view showing a control information input unit provided in the container of the gas separating system in FIG. 1.
FIG. 8 is an exploded perspective view showing a configuration of an outer frame provided in the container of the gas separating system in FIG. 1.
FIG. 9 is an exploded perspective view showing a configuration of the outer frame provided in the container of the gas separating system in FIG. 1.
FIG. 10 is a left side view showing a nozzle coupling unit provided in the container of the gas separating system in FIG. 1.
FIG. 11 shows a partial enlarged view (a) of A in FIG. 10 and a partial enlarged view (b) of B in FIG. 10.
FIG. 12 is a sectional view taken along line A-A, showing a weight sensing unit provided in the container of the gas separating system in FIG. 1.
FIG. 13 shows a perspective view and a partial enlarged perspective view, showing a state in which the weight sensing unit in FIG. 12 is extracted.
FIG. 14 is a front projection view showing a modified example of the weight sensing unit in FIG. 12.
FIGS. 15 and 16 are exploded perspective views showing an inner frame provided in the container of the gas separating system in FIG. 1.
FIG. 17 is a perspective view showing the inner frame in FIGS. 15 and 16.
FIG. 18 is a plan view showing the inner frame in FIGS. 15 and 16.
FIGS. 19 and 20 are respectively a plan sectional view and a side projection view, exemplifying a configuration arranged inside the gas separating system in FIG. 1.

### DETAILED DESCRIPTION

Hereinafter, with reference to the attached drawings, the exemplary embodiments of the present disclosure will be described in detail so that those skilled in the art can easily practice the present disclosure. The present disclosure may be implemented in many different forms and is not limited to the exemplary embodiments described herein. In order to clearly explain the present disclosure, parts that are not related to the description have been omitted in the drawings, and the same or similar components are assigned the same reference numerals throughout the specification.

The words and terms used in the present specification and claims are not to be construed as limited in their usual or dictionary meanings, but according to the principle that the inventor can define terms and concepts in order to explain his or her invention in the best way, they must be interpreted with meaning and concepts consistent with technical ideas.

Therefore, the exemplary embodiments described in the present specification and the configuration illustrated in the drawings correspond to a preferred exemplary embodiment of the present disclosure, and do not represent the entire technical idea of the present disclosure, and thus, the corresponding configuration may have various equivalents and variations that may replace the same at the time of filing of the present disclosure.

In the following description, in order to clarify the characteristics of the present disclosure, the descriptions of some components may be omitted.

The term "communication" used in the following description means that one or more members are connected to each other in fluid communication. In an exemplary embodiment, the communication channel may be formed by a member such as a conduit, pipe or piping. In the following description, the communication may be used as the same meaning as that one or more members are "fluidically connected" to each other.

The term "electrical conduction" used in the following description means that one or more members are connected to each other to transmit current or electrical signals. In an exemplary embodiment, the electrical conduction may be formed in a wired form using a conductor member, or in a wireless form such as Bluetooth, Wi-Fi or RFID. In an exemplary embodiment, the electrical conduction may include a meaning of "communication."

The term "fluid" used in the following description refers to a substance in any state whose shape can be changed by external pressure or temperature. In an exemplary embodiment, the fluid may be in the form of liquid such as water or gas such as air.

The terms "upper side," "lower side," "left side," "right side," "front side," and "rear side" used in the following description will be understood with reference to a coordinate system shown throughout the accompanying drawings.

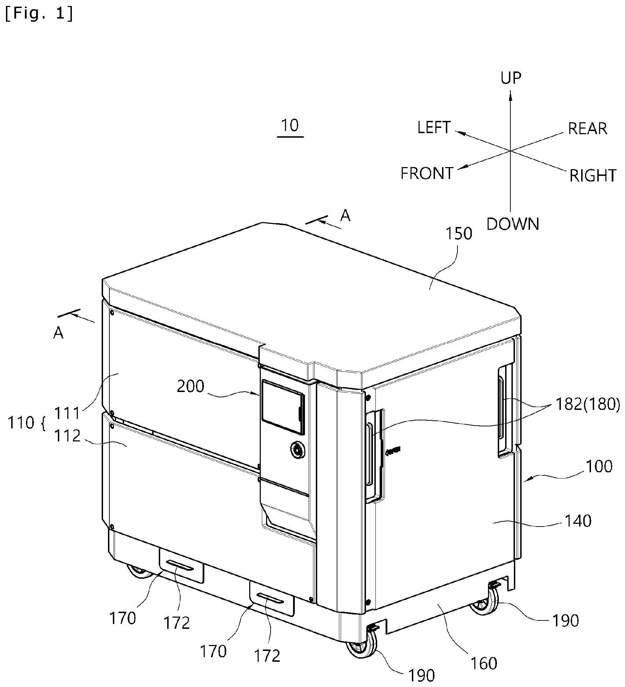

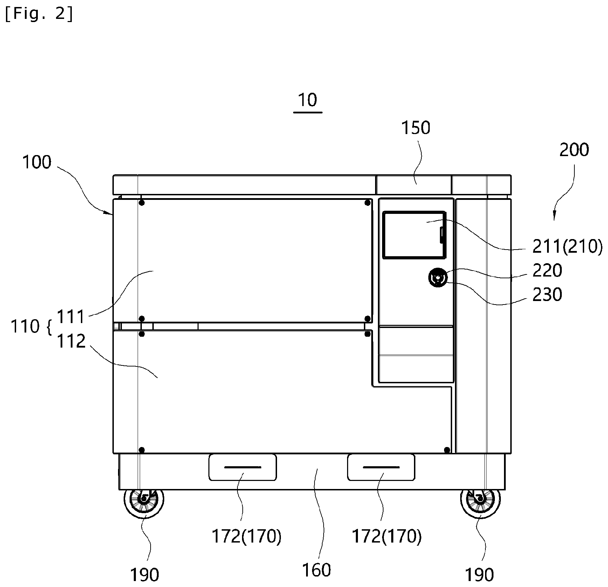

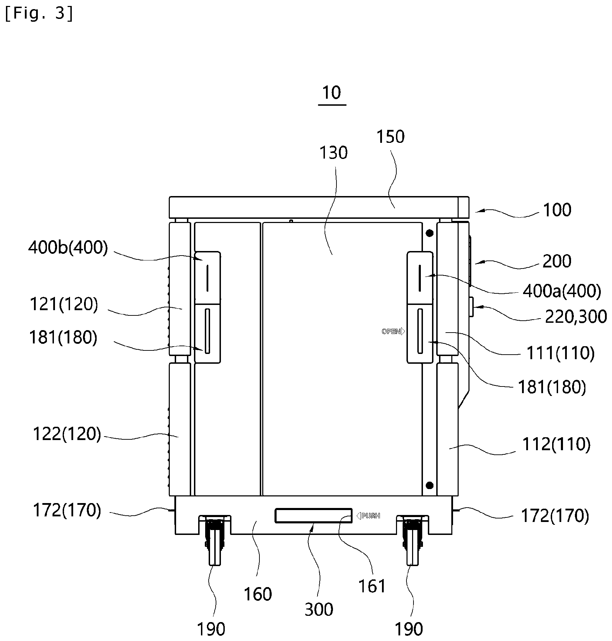

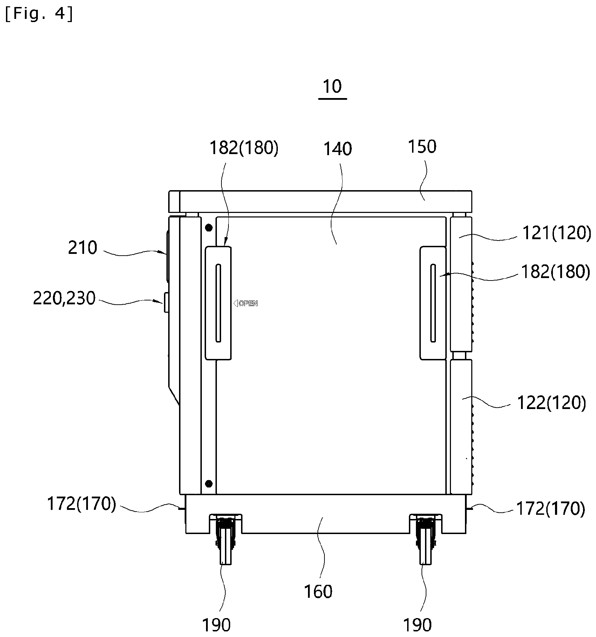

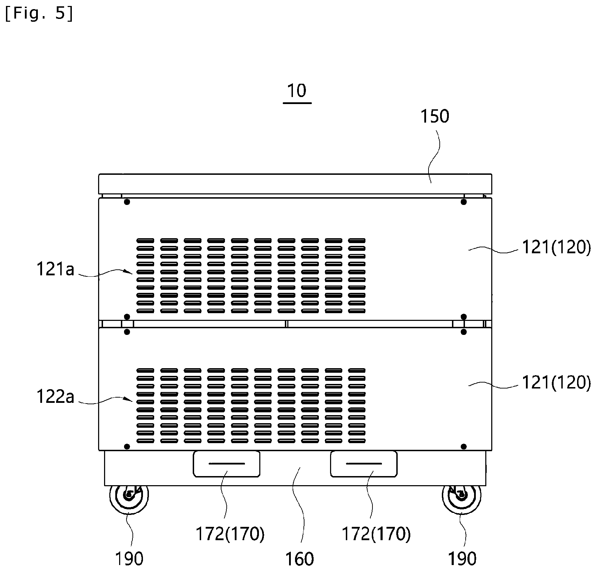

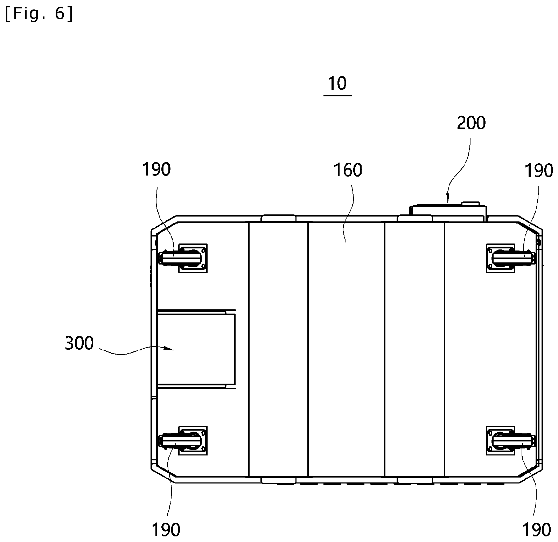

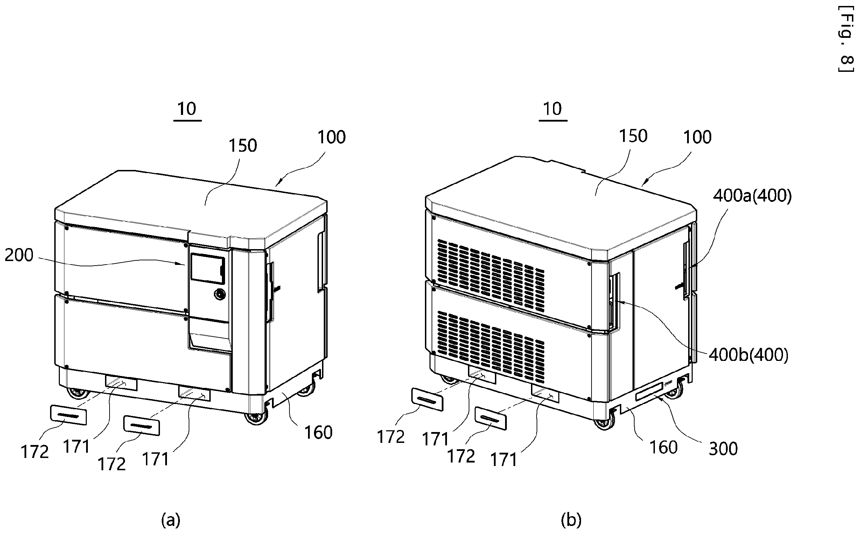

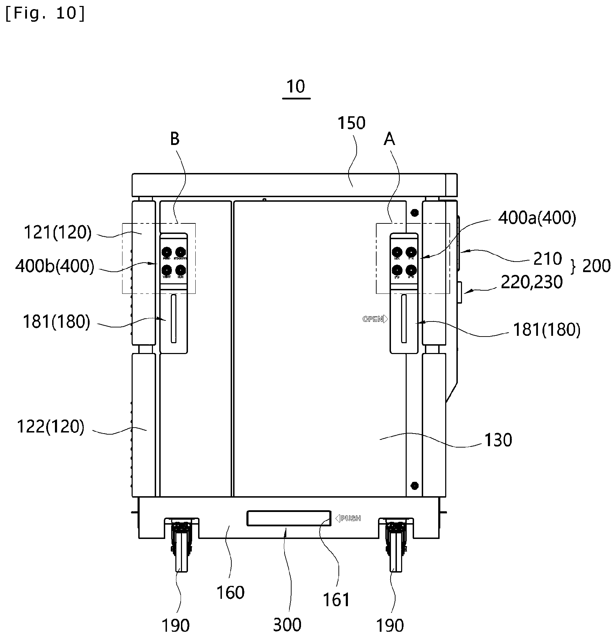

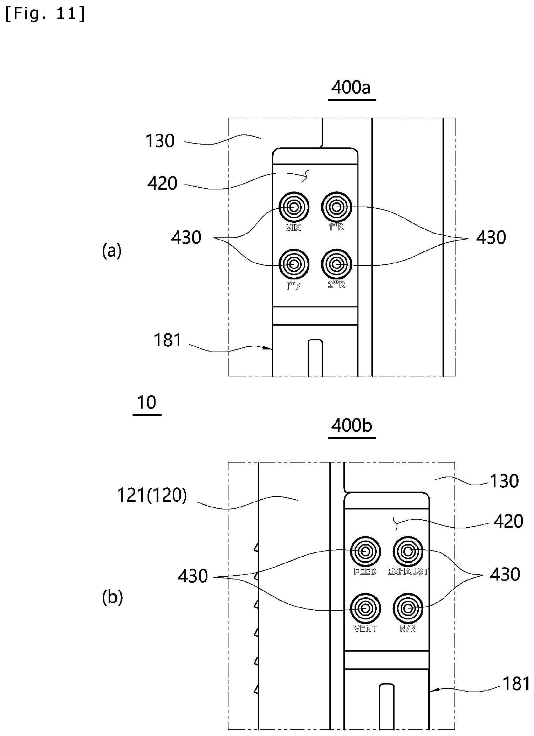

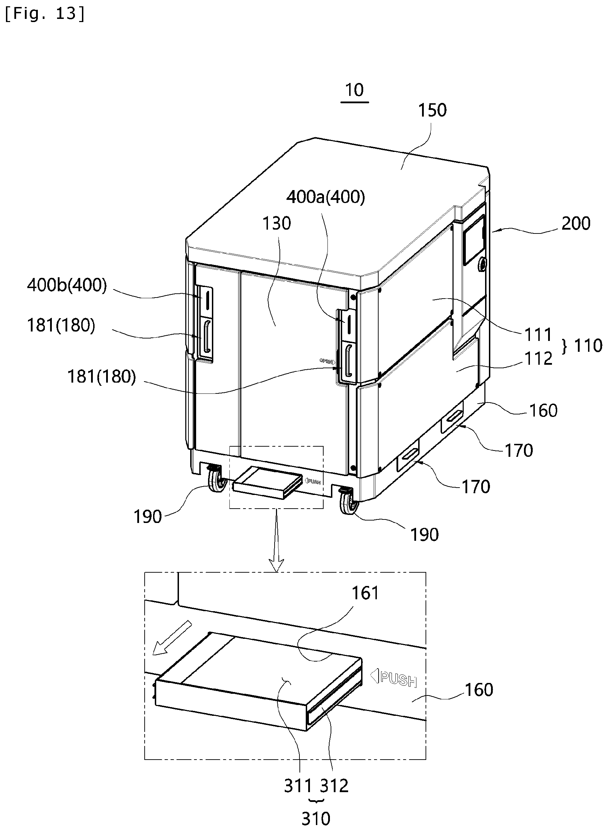

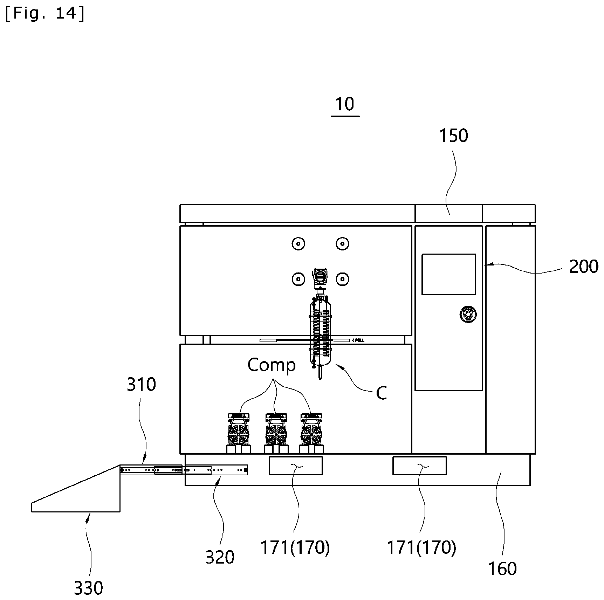

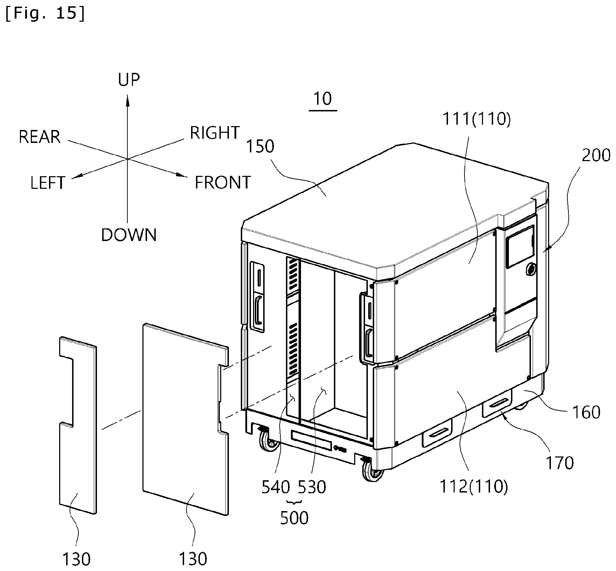

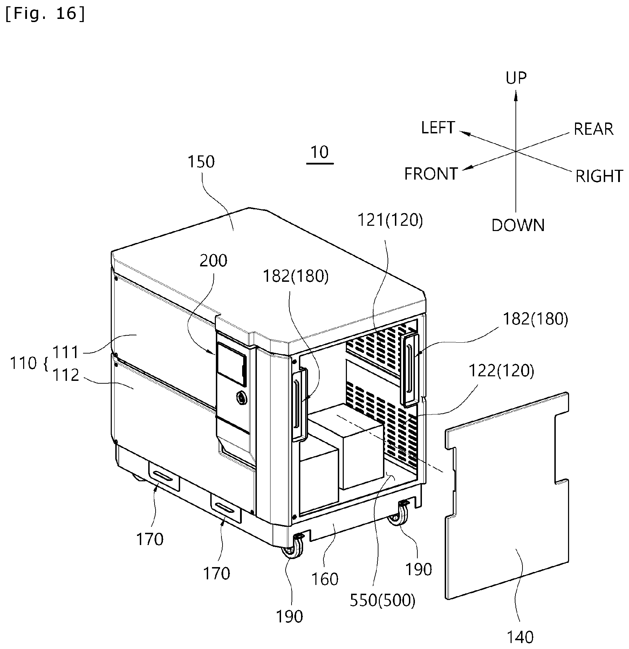

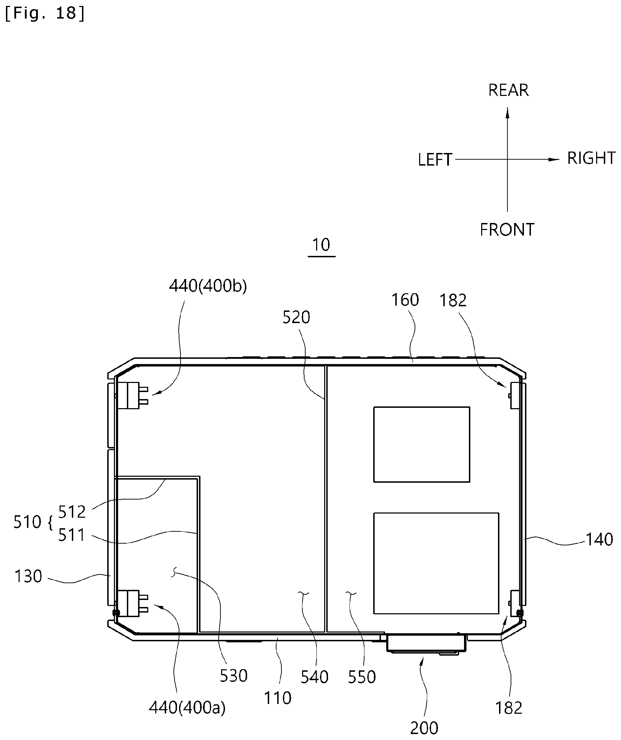

Referring to FIGS. 1 to 20, a container 10 of a gas separating system according to an embodiment of the present disclosure is shown. The container 10 of the gas separating system according to the embodiment of the present disclosure may accommodate the gas separating system (not shown). The container 10 of the gas separating system may electrically and fluidically connect the accommodated gas separating system (not shown) to the outside.

The container 10 of the gas separating system may be movably provided. The movement may be performed by external equipment, such as a crane (not shown) or a fork lift, or an operator. In particular, the container 10 of the gas separating system according to the embodiment of the present disclosure may include a wheel member 190 that is rolling movable, to be easily movable even by an operator.

In addition, the container 10 of the gas separating system may thermally insulate the gas separating system (not shown) from the outside. Further, the container 10 of the gas separating system may be configured to cool heat generated in the gas separating system (not shown).

Furthermore, the container 10 of the gas separating system may be configured such that components accommodated therein are thermally insulated. To this end, an internal space of the container 10 of the gas separating system may be divided into a plurality of subspaces such that the plurality of subspaces accommodate components of the gas separating system (not shown), respectively.

In the embodiment shown in FIGS. 1 to 20, the container 10 of the gas separating system includes an outer frame 100, a control information input unit 200, a weight sensing unit 300, a nozzle coupling unit 400, and an inner frame 500.

The outer frame 100 constitutes an appearance of the container 10 of the gas separating system. The outer frame 100 constitutes a portion of the container 10 of the gas separating system, which is exposed to the outside. A space may be formed inside the outer frame 100 to accommodate the gas separating system (not shown) and some components of the container 10 of the gas separating system. In addition, other components of the container 10 of the gas separating system may be coupled to the outer frame 100.

The outer frame 100 may have an arbitrary shape capable of accommodating the gas separating system (not shown). In the shown embodiment, the outer frame 100 has a polygonal pillar shape with a front-rear length, a left-right width, and an up-down height.

The outer frame 100 may be movably provided. As described above, the outer frame 100 may be moved by separate equipment or an operator. Accordingly, other components coupled to or accommodated in the outer frame 100 are also moved together, and consequently, the container 10 of the gas separating system can be moved.

The outer frame 100 is coupled to the control information input unit 200. The outer frame 100 accommodates some components of the control information input unit 200, and may be coupled to the control information input unit 200 such that other components of the control information input unit 200 are exposed. In the shown embodiment, the weight sensing unit 300 is located at a front upper side of the outer frame 100.

The outer frame 100 is coupled to the weight sensing unit 300. The outer frame 100 accommodates the weight sensing unit 300 to be drawable. In the shown embodiment, the weight sensing unit 300 is located at a left lower side of the outer frame 100.

The outer frame 100 is coupled to the nozzle coupling unit 400. The outer frame 100 is coupled to the nozzle coupling unit 400 such that some components of the nozzle coupling unit 400 are exposed to the outside and other components of the nozzle coupling unit 400 are accommodated inside the outer frame 100. In the shown embodiment, the nozzle coupling unit 400 is located at a left upper side of the outer frame 100.

The outer frame 100 accommodates the inner frame 500. The space formed inside the outer frame 100 may be divided into a plurality of subspaces by the inner frame 500. The inner frame 500 accommodated inside the outer frame 100 may not be exposed to the outside.

In the shown embodiment, the outer frame 100 includes a first outer frame 110, a second outer frame 120, a third outer frame 130, a fourth outer frame 140, a fifth outer frame 150, a sixth outer frame 160, a pull-up coupling unit 170, a handle member 180, and the wheel member 190.

The first outer frame 110 constitutes a portion of the outer frame 100. The first outer frame 110 surrounds the space formed inside the outer frame 100 at one side. In the shown embodiment, the first outer frame 110 constitutes a front side of the outer frame 100. The first outer frame 110 surrounds the space formed inside the outer frame 100 at the front side.

The first outer frame 110 may be removably provided. When the first outer frame 110 is separated, the space formed inside the outer frame 100 may be exposed through the front side.

The first outer frame 110 may be formed to surround the control information input unit 200. In the shown embodiment, since the control information input unit 200 is located biased to the right of the front upper side of the outer frame 100, the first outer frame 110 surrounds the control information input unit 200 at a left side and a lower side.

The first outer frame 110 may be divided into a plurality of portions. The plurality of portions constituting the first outer frame 110 may be arranged to be spaced apart from each other in a height direction of the outer frame 100. In the shown embodiment, the first outer frame 110 includes a first panel frame 111 and a second panel frame 112.

The first panel frame 111 constitutes an upper side among the plurality of portions constituting the first outer frame 110. The first panel frame 111 is removably provided, and surrounds the control information input unit 200 at one side of a length direction, i.e., the left side in the shown embodiment.

The second panel frame 112 constitutes a lower side among the plurality of portions constituting the first outer frame 110. The second panel frame 112 is also removably provided, and surrounds the control information input unit 200 at the one side of the length direction and one side of the height direction, i.e., the left side and the lower side in the shown embodiment.

The second outer frame 120 constitutes another portion of the outer frame 100. The second outer frame 120 surrounds the space formed inside the outer frame 100 at an opposite side. In the shown embodiment, the second outer frame 120 constitutes a rear side of the outer frame 100. The second outer frame 120 surrounds the space formed inside the outer frame 100 at the rear side. The second outer frame 120 is arranged to face the first outer frame 110 with the space formed inside the outer frame 100, which is interposed therebetween.

The second outer frame 120 may be removably provided. When the second outer frame 120 is separated, the space formed inside the outer frame 100 may be exposed through the rear side.

A component for communicating the space formed inside the outer frame 100 with the outside may be formed in the second outer frame 120. Ambient air may be introduced into the outer frame 100 to cool the gas separating system (not shown) and then again discharged. Although not shown in the drawings, a component, e.g., a fan (not shown) or the like for providing a feed force to ambient air may be provided so as to achieve inlet and outlet of the ambient air.

The second outer frame 120 may be divided into a plurality of portions. The plurality of portions constituting the second outer frame 120 may be arranged to be spaced apart from each other in the height direction of the outer frame 100. In the shown embodiment, the second outer frame 120 includes a first exhaust frame 121 and a second exhaust frame 122.

The first exhaust frame 121 constitutes an upper side among the plurality of portions constituting the second outer frame 120. The first exhaust frame 121 is removably provided. A first exhaust communication hole 121a is formed in the first exhaust frame 121.

The first exhaust communication hole 121a forms a passage through which ambient air introduced into the space formed inside the outer frame 100 is again discharged to the outside. The first exhaust communication hole 121a is formed in the first exhaust frame 121. The first exhaust communication hole 121a is formed to penetrate the first exhaust frame 121 in a thickness direction of the first exhaust frame 121, i.e., a front-rear direction in the shown embodiment.

The first exhaust communication hole 121a may be formed in plurality. The plurality of first exhaust communication holes 121a may be arranged while being spaced apart from each other, to communicate the space formed inside the outer frame 100 with the outside at different positions. In the shown embodiment, the first exhaust communication hole 121a is formed in plurality, to be arranged while being spaced apart from each other in the length direction and the height direction of the outer frame 100, i.e., a left-right direction and an up-down direction.

The second exhaust frame 122 constitutes a lower side among the plurality of portions constituting the second outer frame 120. The second exhaust frame 122 is removably provided. A second exhaust communication hole 122a is formed in the second exhaust frame 122.

The second exhaust communication hole 122a forms a passage through which ambient air is introduced into the space formed inside the outer frame 100. The second exhaust communication hole 122a is formed in the second exhaust frame 122. The second exhaust communication hole 122a is formed to penetrate the second exhaust frame 122 in a thickness direction of the second exhaust frame 122, i.e., the front-rear direction in the shown embodiment.

The second exhaust communication hole 122a may be formed in plurality. The plurality of second exhaust communication holes 122a may be arranged while being spaced apart from each other, to communicate the space formed inside the outer frame 100 with the outside at different positions. In the shown embodiment, the second exhaust communication hole 122a is formed in plurality, to be arranged while being spaced apart from each other in the length direction and the height direction of the outer frame 100, i.e., the left-right direction and the up-down direction.

The number and arrangement method of the first exhaust communication holes 121a and the second exhaust communication holes 122a may be changed such that the first exhaust communication holes 121a and the second exhaust communication holes 122a correspond to each other.

A fan (not shown) or the like for providing a feed force to ambient air may be provided in a portion adjacent to the second exhaust communication space 122a in the space formed inside the outer frame 100, which is described above.

The third outer frame 130 constitutes still another portion of the outer frame 100. The third outer frame 130 surrounds the space formed inside the outer frame 100 at still another side. In the shown embodiment, the third outer frame 130 constitutes a left side of the outer frame 100. The third outer frame 130 surrounds the space formed inside the outer frame 100 at the left side.

The third outer frame 130 may be removably provided. When the third outer frame 130 is separated, the space formed inside the outer frame 100 may be exposed through the left side.

The third outer frame 130 may be formed to surround the nozzle coupling unit 400. In the shown embodiment, since the third outer frame 130 is located at each of the left and right of the left upper side of the outer frame 100, the third outer frame 130 surrounds the nozzle coupling unit 400 at the left and right.

The fourth outer frame 140 constitutes still another portion of the outer frame 100. The fourth outer frame 140 surrounds the space formed inside the outer frame 100 at still another side. In the shown embodiment, the fourth outer frame 140 constitutes a right side of the outer frame 100. The fourth outer frame 140 surrounds the space formed inside the outer frame 100 at the right side. The fourth outer frame 140 is arranged to face the third outer frame 130 with the space formed inside the outer frame 100, which is interposed therebetween.

The fourth outer frame 140 may be removably provided. When the fourth outer frame 140 is separated, the space formed inside the outer frame 100 may be exposed through the right side.

The fifth outer frame 150 constitutes still another portion of the outer frame 100. The fifth outer frame 150 surrounds the space formed inside the outer frame 100 at still another side. In the shown embodiment, the fifth outer frame 150 constitutes an upper side of the outer frame 100. The fifth outer frame 150 surrounds the space formed inside the outer frame 100 at the upper side.

The fifth outer frame 150 may be removably provided. When the fifth outer frame 150 is separated, the space formed inside the outer frame 100 may be exposed through the upper side.

The sixth outer frame 160 constitutes still another portion of the outer frame 100. The sixth outer frame 160 surrounds the space formed inside the outer frame 100 at the other side. In the shown embodiment, the sixth outer frame 160 constitutes a lower side of the outer frame 100. The sixth outer frame 160 surrounds the space formed inside the outer frame 100 at the lower side. The sixth outer frame 160 is arranged to face the fifth outer frame 150 with the space formed inside the outer frame 100, which is interposed therebetween.

The pull-up coupling unit 170 is located in the sixth outer frame 160. The pull-up coupling unit 170 is located at each side of a length direction of the sixth outer frame 160, i.e., the front side and the rear side in the shown embodiment. As will be described later, a pull-up member coupling space 171 of the pull-up coupling unit 170 may penetrate the sixth outer frame 160 in a length direction of the sixth outer frame 160, i.e., the front-rear direction.

The sixth outer frame 160 is coupled to the wheel member 190. The sixth outer frame 160 may be movably supported by the wheel member 190. In the shown embodiment, a lower side of the sixth outer frame 160 is coupled to the wheel member 190.

The sixth outer frame 160 is coupled to the weight sensing unit 300. A space is formed inside the sixth outer frame 160, to accommodate the weight sensing unit 300 to be drawable.

In the shown embodiment, a scale accommodation opening 161 is formed in the sixth outer frame 160.

The scale accommodation opening 161 forms a passage through which a scale member 310 of the weight sensing unit 300 is accommodated in the sixth outer frame 160 to be drawable. The scale accommodation opening 161 is formed to penetrate the sixth outer frame 160 at one side of the sixth outer frame 160, i.e., the left side in the shown embodiment. The scale accommodation opening 161 communicates with the space formed inside the sixth outer frame 160.

The scale accommodation opening 161 may have a shape corresponding to a shape of the scale member 310. In the shown embodiment, the scale accommodation opening 161 is formed to have a section with a front-rear length longer than an up-down height.

The above-described first to sixth outer frames 110, 120, 130, 140, 150, and 160 may extend to form a predetermined angle with respect to each other. In the shown embodiment, the first to sixth outer frames 110, 120, 130, 140, 150, and 160 extend perpendicular to each other.

The pull-up coupling unit 170 is a portion at which a pull-up member provided in the crane, the fork lift or the like, described above, is coupled to the outer frame 100. The outer frame 100 and the container 10 of the gas separating system configured thereby may be coupled to the crane, the fork lift, or the like through the pull-up coupling unit 170.

The pull-up coupling unit 170 is located in the sixth outer frame 160. As described above, the sixth outer frame 160 constitutes the lower side of the outer frame 100, and therefore, it will be understood that the pull-up member can pull up the outer frame 100 while supporting the outer frame 100 at the lower side.

The pull-up coupling unit 170 may be provided in plurality. The plurality of pull-up coupling units 170 may be spaced apart from each other, to be coupled to the pull-up member at different positions. In the shown embodiment, a total of four pull-up coupling units 170 are provided, so that a pair of pull-up coupling units 170 are arranged at a front side of the sixth outer frame 160 and a pair of pull-up coupling units 170 are arranged at a rear side of the sixth outer frame 160.

One pair of pull-up coupling units 170 located biased to one widthwise side, i.e., a left side of the sixth outer frame 160 may be arranged to overlap each other along a length direction, i.e., a front-rear direction of the container 10 of the gas separating system.

Similarly, another pair of pull-up coupling units 170 located biased to an opposite widthwise side, i.e., a right side of the sixth outer frame 160 may be arranged to overlap each other along the length direction, i.e., the front-rear direction of the container 10 of the gas separating system.

Therefore, pull-up member coupling spaces 171 provided in the respective pull-up coupling unit 170 may communicate with each other along the front-rear direction.

The pull-up coupling unit 170 may include a component to which the pull-up member is coupled and a component for covering the component. In the shown embodiment, the pull-up coupling unit 170 may include the pull-up member coupling space 171 and a pull-up cover 172.

The pull-up member coupling space 171 accommodates the pull-up member to be drawable. The pull-up member coupling space 171 is formed to penetrate the outer frame 100 along a width direction of the outer frame 100. In the shown embodiment, the pull-up member coupling space 171 is formed to penetrate the sixth outer frame 160 in a front-rear direction of the sixth outer frame 160 constituting the lower side of the outer frame 100.

The pull-up member coupling space 171 may have an arbitrary shape capable of accommodating the pull-up member to be drawable. In the shown embodiment, the pull-up member coupling space 171 is formed as a polygonal pillar space that has a quadrangular section and extends in the front-rear direction.

The pull-up member coupling space 171 may be closed by the pull-up cover 172.

The pull-up cover 172 opens or closes the pull-up member coupling space 171. The pull-up cover 172 may be removably coupled to the sixth outer frame 160. The pull-up cover 172 may have a shape corresponding to a shape of the pull-up member coupling space 171. In the shown embodiment, the pull-up cover 172 is formed in a plate shape with a quadrangular section and a front-rear thickness, and includes a handle (no reference numeral) protruding outward.

The handle member 180 is a component held to move the container 10 of the gas separating system. The handle member 180 may be located at an outside of the outer frame 100, to be held by an operator, a tool, a device, or the like. When an external force is applied in a state in which the handle member 180 is held, the container 10 of the gas separating system may be moved.

The handle member 180 is exposed to the outside of the outer frame 100. In the shown embodiment, the handle member 180 is located in the length direction, i.e., the left-right direction of the outer frame 100.

The handle member 180 may have an arbitrary shape capable of being held by an operator, a tool, a device, or the like. In the shown embodiment, the handle member 180 is formed to have an up-down length.

The handle member 180 may be provided in plurality. The plurality of handle members 180 may be arranged at different positions, to each receive an external force. In the shown embodiment, the handle member 180 includes a first handle member 181 and a second handle member 182.

The first handle member 181 is located at one side of the length direction of the outer frame 100, i.e., the left side in the shown embodiment. In other words, the first handle member 181 is located adjacent to the third outer frame 130 constituting the left side.

The first handle member 181 is located adjacent to the nozzle coupling unit 400. In the shown embodiment, the first handle member 181 is located at an upper side of the nozzle coupling unit 400. Therefore, the first handle member 181 may extend by a length short as compared with the second handle member 182.

The first handle member 181 may be provided in plurality. The plurality of first handle member 181 may be arranged to be spaced apart from each other in the width direction of the outer frame 100, i.e., the front-rear direction in the shown embodiment. In the shown embodiment, the first handle member 181 is provided in a pair to be located adjacent to a pair of nozzle coupling units 400, respectively.

Meanwhile, the first handle member 181 may support a chain or the like for supporting a container (not shown) accommodating a mixed gas, which is mounted on the weight sensing unit 300. In other words, a member such as the chain may support the container (not shown) in a state in which the member is supported by the first handle member 181.

Therefore, it will be understood that the first handle member 181 also performs a function of supporting the container (not shown).

The second handle member 182 is located at an opposite side of the length direction of the outer frame 100, i.e., the right side in the shown embodiment. In other words, the second handle member 182 is located adjacent to the fourth outer frame 140 constituting the right side.

The second handle member 182 may extend by a length long as compared with the first handle member 181. As described above, this results from that the nozzle coupling unit 400 is not separately arranged in the fourth outer frame 140 in which the second handle member 182 is arranged.

In an embodiment, an extension length of the second handle member 182 may be formed equal to or smaller than a sum of extension lengths of the first handle member 181 and the nozzle coupling unit 400.

The second handle member 182 may be provided in plurality. The plurality of second handle members 182 may be arranged to be spaced apart from each other in the width direction of the outer frame 100, i.e., the front-rear direction in the shown embodiment. In the shown embodiment, the second handle member 182 is provided in a pair, to be located adjacent to corners of a width direction of the fourth outer frame 140, respectively.

The wheel member 190 movably supports the outer frame 100. An external force applied to the handle member 180 may be changed such that the container 10 of the gas separating system is moved by the wheel member 190.

The wheel member 190 is located at one side of the height direction of the outer frame 100, i.e., the lower side in the shown embodiment. The wheel member 190 is coupled to a lower surface of the sixth outer frame 160 constituting the lower side of the outer frame 100.

Although not shown in the drawings, a brake (not shown) may be provided in the wheel member 190. The brake (not shown) may be configured to fix the wheel member 190, thereby preventing arbitrary movement of the container 10 of the gas separating system.

The wheel member 190 may be provided in plurality. The plurality of wheel members 190 may be coupled to the sixth outer frame 160 at different positions, to movably support the container 10 of the gas separating system. In the shown embodiment, four wheel members 190 are provided, to be arranged at front left and right sides and rear left and right sides, respectively.

In an embodiment, the wheel member 190 may be provided to be movable vertically. Therefore, the wheel member 190 may be configured to adjust a distance between the sixth outer frame 160 and a ground.

In an embodiment in which the wheel member 190 is provided in plurality, the plurality of wheel members 190 may be provided to be independently movable vertically. Accordingly, the container 10 of the gas separating system can be always maintained in a horizontal state regardless of the degree of inclination of a position at which the container 10 of the gas separating system is arranged.

A level may be provided such that the container 10 of the gas separating system is more accurately maintained in the horizontal state. In an embodiment in which the wheel member 190 is provided in plurality, the level may be provided in plurality to be located adjacent to the plurality of wheel members 190, respectively.

The control information input unit 200 is a component for receiving a control signal from an outside. The control information input unit 200 is exposed to the outside of the outer frame 110. An operator may input a control signal for controlling the gas separating system (not shown) through the control information input unit 200.

The control information input unit 200 is connected to the gas separating system (not shown) to be electrically conducted to the gas separating system (not shown). The control information input unit 200 may control components of the gas separating system (not shown), corresponding to the input control signal.

The control information input unit 200 is connected to an external power source (not shown) to be electrically connected to the external power source (not shown). Power necessary for an operation of the control information input unit 200 or the gas separating system (not shown) may be transmitted from the external power source (not shown) to the control information input unit 200.

The control information input unit 200 is coupled to the outer frame 100. In the shown embodiment, the control information input unit 200 is located at the front upper side of the outer frame 100, to be located adjacent to the first outer frame 110.

The control information input unit 200 is partially surrounded by the first outer frame 110. In the shown embodiment, the control information input unit 200 is surrounded by the first outer frame 110 at the left side and the lower side. In addition, an upper side of the control information input unit 200 is surrounded by the fifth outer frame 150.

In the shown embodiment, the control information input unit 200 includes a control panel 210, an emergency button 220, and an emergency button housing 230.

The control panel 210 is a component through which the control information input unit 200 receives the control signal. When the control panel 210 is used, the control panel 210 is opened to be exposed to the outside. When the control panel 210 is not used, the control panel 210 is closed to be protected from the outside.

The control panel 210 is located adjacent to the first outer frame 110, to be surrounded by the first outer frame 210. The control panel 210 is located adjacent to the emergency button 220 and the emergency button housing 230. In the shown embodiment, the control panel 210 is located at an upper side of the emergency button 220 and the emergency button housing 230 surrounding the same.

The control panel 210 may be formed in an arbitrary shape capable of receiving a control signal from the outside and outputting information on an operation state of the gas separating system (not shown). In the shown embodiment, the control panel 210 is provided in the form of a touch screen. In the embodiment, the control panel 210 includes a control panel cover 211 and a control panel screen 212.

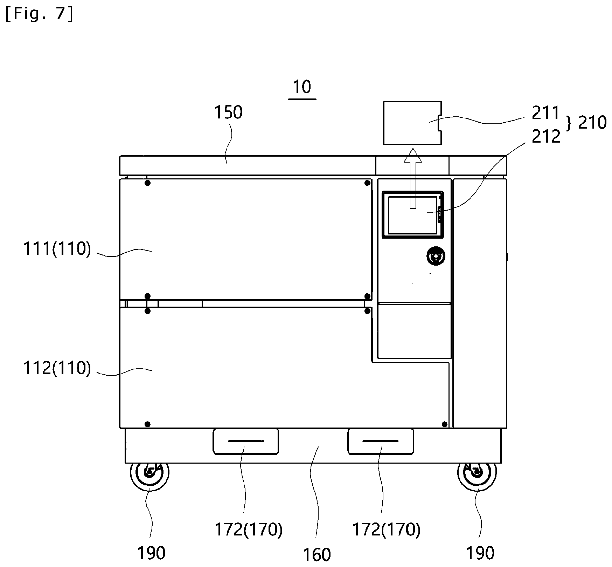

The control panel cover 211 constitutes a portion of the control panel 210. The control panel cover 211 is movably provided, to open or close the control panel screen 212. In the embodiment shown in FIG. 7, the control panel cover 211 is configured to be moved in the up-down direction to open or close the control panel screen 212. Alternatively, the control panel cover 211 may be configured to be rotated to open or close the control panel screen 212.

In the shown embodiment, it is shown that the control panel cover 211 is completely separated from the first outer frame 110. Alternatively, the control panel cover 211 may be configured to open the control panel screen 212 to be maintained in a state in which the control panel cover 211 is coupled to the first outer frame 110.

The control panel cover 211 may have a shape corresponding to a shape of the control panel screen 212. In the shown embodiment, the control panel cover 211 is formed in a plate shape with a quadrangular section.

Alternatively, the control panel cover 211 may be maintained in a state in which the control panel cover 211 always covers the control panel screen 212. In the embodiment, the control panel cover 211 may be made of at least a translucent material to allow an operator to recognize information output on the control panel screen 212. In addition, in the embodiment, the control panel cover 211 may be configured to transmit, to the control panel screen 212, a control signal input through a push or touch operation.

The control panel screen 212 receives a control signal from the outside. In addition, the control panel screen 212 may output, to the outside, information on an operation state of the gas separating system (not shown) operated according to the received control signal.

The control panel screen 212 may be provided in an arbitrary form capable of receiving a control signal, controlling the gas separating system (not shown), using the received control signal, and outputting information on a control result. In the above-described embodiment, the control panel screen 212 is provided in the form of a touch screen.

The emergency button 220 and the emergency button housing 230 are located adjacent to the control panel 210.

The emergency button 220 receives a control signal for urgently stopping the gas separating system (not shown) in an emergency situation. The emergency button 220 is located adjacent to the first outer frame 110, to be located at a front side of the container 10 of the gas separating system.

The emergency button 220 is located adjacent to the control panel 210. In the shown embodiment, the emergency button 220 is spaced apart from the control panel 210 to be located at a lower side of the control panel 210. Therefore, an operator may input a control signal through the control panel 210 and may input a control signal for stopping through the emergency button 220 without excessive movement.

The emergency button 220 may be provided in an arbitrary shape capable of receiving a control signal for urgently stopping the gas separating system (not shown). In the shown embodiment, the emergency button 220 is provided in the shape of a button push-operated to receive the control signal.

In the embodiment, the emergency button 220 may be formed to further protrude to the front side as compared with the first outer frame 110. Accordingly, an operator can easily detect a position of the emergency button 220 and quickly apply a control signal for urgent stopping through the emergency button 220.

In the embodiment, there exists a risk that the emergency button 220 will be mal-operated as the emergency button 220 protrudes as compared with the first outer frame 110. In order to prevent this, the emergency button housing 230 may be provided.

The emergency button housing 230 surrounds the emergency button 220 at a radial outer side. The emergency button housing 230 may be formed to further protrude to the front side as compared with the first outer frame 110. A protrusion length of the emergency button housing 230 may be formed equal to or larger than a protrusion length of the emergency button 220.

In the embodiment, a radial direction of the emergency button 220 is surrounded by the emergency button housing 230, thereby reducing the risk that the emergency button 220 will be mal-operated.

The emergency button housing 230 may have an arbitrary shape surrounding the emergency button 220 in the radial direction, thereby preventing mal-operation. In the shown embodiment, the emergency button housing 230 has the shape of a solid figure with an annular section and a front-rear thickness. The emergency button 220 may be located in a space formed inside the emergency button housing 230.

The weight sensing unit 300 supports a container (not shown) accommodating a mixed gas supplied to the gas separating system (not shown). The weight sensing unit 300 may sense in real time a weight of the container (not shown) mounted thereon and the mixed gas accommodated in the container (not shown). The sensed weight may be output to the outside through the control information input unit 200. In addition, the gas separating system (not shown) may be controlled corresponding to the sensed weight.

The mixed gas accommodated in the container (not shown) is separated into a gas which is a collection target and the other gases as the gas separating system (not shown) is operated, and the amount of the mixed gas is gradually decreased. When the amount of the mixed gas accommodated in the container (not shown is decreased, the container (not shown) is to be separated to be replaced with another container (not shown).

According to the container 10 of the gas separating system according to the embodiment of the present disclosure, information on a change in weight of the mixed gas accommodated in the container (not shown) can be provided in real time to the control information input unit 200 or an operator. Accordingly, the amount of the mixed gas remaining in the container (not shown) is also detected in real time, so that a time at which the container (not shown) is to be separated and replaced can be accurately and quickly detected.

The weight sensing unit 300 is coupled to the outer frame 100. Some components of the weight sensing unit 300are accommodated in the outer frame 100 to be drawable. In the shown embodiment, the weight sensing unit 300 is accommodated in a left portion in the sixth outer frame 160 constituting the lower side to be drawable. In the shown embodiment, the weight sensing unit 300 is provided in the form of a drawer.

The weight sensing unit 300 is connected to the control information input unit 200 to be electrically conducted to the control information input unit 200. Power necessary for an operation of the weight sensing unit 300 may be supplied from the control information input unit 200. Information on a weight of the container (not shown) or the mixed gas accommodated therein, which is sensed in the weight sensing unit 300, may be transmitted to the control information input unit 200.

In an embodiment not shown, the weight sensing unit 300 may be accommodated inside the outer frame 100. In the embodiment, the weight sensing unit 300 may be configured to be drawn as any one of the first to fourth outer frames 110, 120, 130, and 140 constituting an appearance in a horizontal direction of the outer frame 100 is opened.

In the embodiment, the weight sensing unit 300 may be hinge-fitted to the outer frame 100. Therefore, the weight sensing unit 300 is located inside the outer frame 100 in a state in which the weight sensing unit 300 is coupled to the outer frame 100, and may be drawn to an outside of the outer frame 100 in a state in which the weight sensing unit 300 is coupled to the outer frame 100 when necessary.

Specifically, in the embodiment, the weight sensing unit 300 may be hinge-fitted to an inner surface of the third outer frame 130 that is movably provided. When the inner surface of the third outer frame 130 is exposed to the outside as the third outer frame 130 is moved, the weight sensing unit 300 may be relatively moved with respect to the third outer frame 130 to be changed to a state in which the weight sensing unit 300 can support the container (not shown).

In the embodiment, the weight sensing unit 300 may be movably coupled to the outer frame 100 between a first position adjacent to the outer frame 100 and a second position further spaced part from the outer frame 100 as compared with the first position.

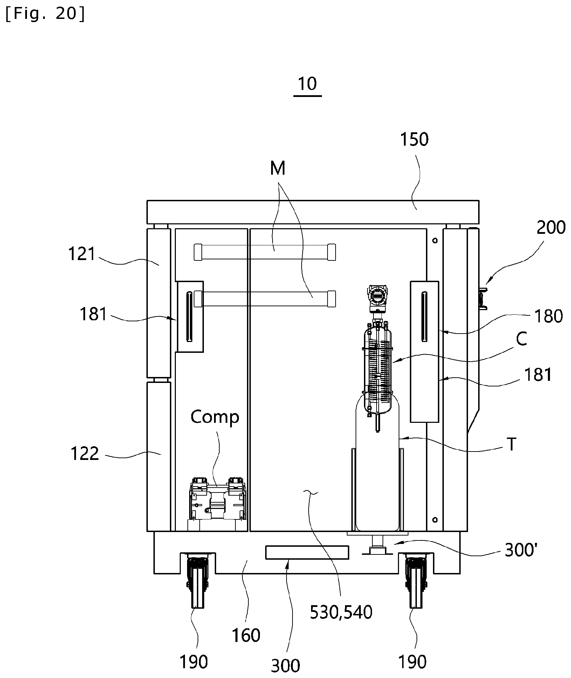

Meanwhile, further referring to FIG. 20, the container 10 of the gas separating system according to the embodiment of the present disclosure may include a collection weight sensing unit 300' for sensing a weight of a collection tank T to be described later. The collection weight sensing unit 300' is arranged on a surface surrounding, at a lower side, a first frame space 530 in which the collection tank T is arranged, to sense in real time a weight of the collection tank T and gas collected in the collection tank T.

Information on a change in weight of the gas collected in the collection tank T, sensed by the collection weight sensing unit 300', may be provided in real time to the control information input unit 200 or an operator. Accordingly, an amount of the gas collected in the collection tank T is also detected in real time, so that a time at which the collection tank T is separated and replaced can be accurately and quickly detected.

In the embodiment shown in FIG. 20, the collection weight sensing unit 300' is provided in the sixth outer frame 160. In an embodiment, the collection weight sensing unit 300' may be accommodated inside the sixth outer frame 160 such that an upper surface thereof is located on a same plane as an upper surface of the sixth outer frame 160.

A guide (no reference numeral) for supporting the collection tank T in the horizontal direction may be provided at an upper side of the collection weight sensing unit 300'. The guide (no reference numeral) may be configured to support the collection tank T in the horizontal direction and cool the collection tank T.

Although not shown in the drawings, a cap member (not shown) for supporting the collection tank T in the horizontal direction may be provided. The cap member (not shown) is located at an upper side of the guide (no reference numeral), to be removably coupled to the collection tank T while surrounding an upper side of the collection tank T. The cap member (not shown) may also be configured to support the collection tank T in the horizontal direction and cool the collection tank T.

In the embodiment, a lower side of a height direction of the collection tank T may be surrounded by the guide (no reference numeral), and an upper side of the height direction of the collection tank T may be surrounded by the cap member (not shown). In the embodiment, since the collection tank T is supported and cooled along the height direction, a state in which the collection tank T is held can be stably maintained, and an arbitrary phase change of liquid (i.e., gas is phase-changed) accommodated in the collection tank T can be prevented.

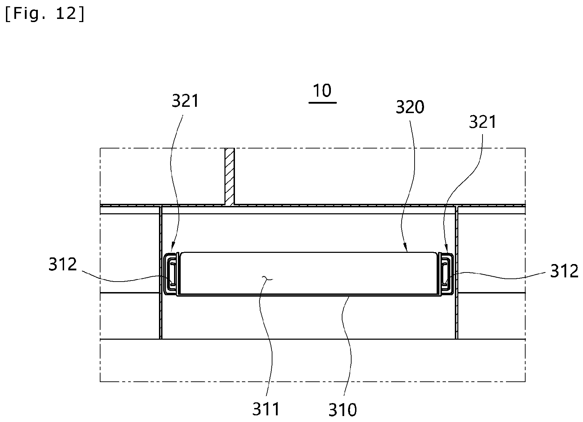

In the embodiment shown in FIGS. 12 to 14, the weight sensing unit 300 includes the scale member 310, a scale support frame 320, and a support member 330.

The scale member 310 supports a container (not shown) and senses a weight of the container (not shown) or a mixed gas accommodated therein. In addition, the scale member 310 transmits the sensed weight to the control information input unit 200.

The scale member 310 may be provided in an arbitrary form capable of sensing a weight of the container (not shown) and the like and transmitting the sensed weight to the control information input unit 200. In an embodiment, the scale member 310 may be provided in the form of an electronic scale.

The scale member 310 may be accommodated in the sixth outer frame 160 to be drawable. That is, when the gas separating system (not shown) is not operated, the scale member 310 may be accommodated in the sixth outer frame 160 through a scale accommodation opening 161. An outer surface of the scale member 310, i.e., a left surface in the shown embodiment may be exposed to the outside while closing the scale accommodating opening 161.

The scale member 310 has an arbitrary shape and may be drawn from the sixth outer frame 160. In an embodiment, the scale member 310 may be push-operated to be drawn from the sixth outer frame 160 and may be again push-operated to be accommodated in the sixth outer frame 160. In the embodiment, the scale member 310 and the sixth outer frame 160 may be coupled to each other in the form of a toggle switch.

The scale member 310 may have an arbitrary shape capable of being accommodated in the sixth outer frame 160 to be drawable. In the shown embodiment, the scale member 310 has the shape of a solid figure with a quadrangular section and a left-right length.

The scale member 310 is coupled to the scale support frame 320. The scale member 310 may be movably supported by the scale support frame 320.

In an embodiment, the scale member 310 is coupled to the support member 330. A free end portion of the scale member 310, which is a portion in a direction opposite to the sixth outer frame 160, i.e., a drawn portion, may be supported by the support member 330.

In the shown embodiment, the scale member 310 includes a mounting space 311 and a moving slide member 312.

The mounting space 311 is a space formed inside the scale member 310. The container (not shown) is at least partially accommodated in the mounting space 3111, to be mounted on the scale member 310. The mounting space 311 is at least partially surrounded by a surface of the scale member 310. In the shown embodiment, left, front, rear, and lower sides of the mounting space 311 are surrounded by the surface of the scale member 310. Therefore, left, front, rear, and lower sides of the container (not shown) accommodated in the mounting space 311 may also be surrounded.

The moving slide member 312 is a portion at which the scale member 310 is movably coupled to the scale support frame 320. The moving slide member 312 extends in a drawing direction or a withdrawing direction of the scale member 310, i.e., the left-right direction in the shown embodiment. The moving slide member 312 is slide-movably coupled to a support slide member 321.

The moving slide member 312 may be provided in plurality. The plurality of moving slide members 312 may be movably coupled to support slide members 321 at different positions, respectively. In the shown embodiment, the moving slide member 312 is provided in a pair, to be located on front and rear outer surfaces of the scale member 310, respectively. The pair of moving slide members 312 are movably coupled and supported to a pair of support slide members 321, respectively.

The scale support frame 320 movably support the scale member 310. The scale support frame 320 is located inside the sixth outer frame 160, not to be arbitrarily exposed to the outside.

The scale support frame 320 may have a shape corresponding to the shape of the scale accommodation opening 161 and the scale member 310. In the shown embodiment, the scale support frame 320 has the shape of a solid figure with a quadrangular section and a left-right length. One side of a length direction, i.e., a left side of the scale support frame 320 is opened, and a space for accommodating the scale member 310 is formed inside the scale support frame 320.

In the shown embodiment, the scale support frame 320 includes the support slide member 321.

The support slide member 321 is coupled to the moving slide member 312. The support slide member 321 movably supports the moving slide member 312. The scale member 310 may be moved in a length direction thereof, i.e., a left-right direction along the support slide member 321.

The support slide member 321 may be provided in plurality. The plurality of support slide members 321 are spaced apart from each other in a width direction of the scale support frame 320, i.e., the front-rear direction in the shown embodiment, to movably support the plurality of moving slide members 312, respectively.

In the shown embodiment, the support slide member 321 is provided in a pair, to be located on inner surfaces of the width direction of the scale support frame 320, i.e., front and rear inner surfaces in the shown embodiment, respectively.

The support slide member 321 may have an arbitrary shape capable of movably supporting the moving slide member 312. In the shown embodiment, the support slide member 321 extends in an extension direction of the moving slide member 312, i.e., the left-right direction, and is formed to surround the moving slide member 312 at an outer side.

The support member 330 supports one side of a length direction of the scale member 310, i.e., a left side in the shown embodiment. The support member 330 is configured to support a free end of the scale member 310, thereby preventing drooping of the scale member 310.

The support member 330 may be coupled to the scale member 310. The support member 330 may be foldably coupled to the scale member 310. In an example, the support member 330 is foldably coupled to a lower surface of the scale member 310, to be maintained in a state in which the support member 330 along with the scale member 310 is accommodated in the sixth outer frame 160. When the scale member 310 is drawn, the support member is drawn together with the scale member 310 and is unfolded, to support the free end of the scale member 310.

Accordingly, the scale member 310 can be stably supported without a separate component for accommodating the support member 330.

The nozzle coupling unit 400 is a component fluidically connecting the gas separating system (not shown) accommodated in the container 10 of the gas separating system to the outside. The nozzle coupling unit 400 is fluidically connected to each of the container (not shown) accommodating the mixed gas (i.e., mounted on the scale member 310) and the gas separating system (not shown).

The nozzle coupling unit 400 is located in the outer frame 100. A portion of the nozzle coupling unit 400 is exposed to an outer side of the outer frame 100. The other portion of the nozzle coupling unit 400 is located inside the outer frame 100. In the shown embodiment, the nozzle coupling unit 400 is located in a left portion of the outer frame 100, to be at least partially surrounded by the third outer frame 130.

The nozzle coupling unit 400 is located adjacent to the handle member 180. In the shown embodiment, the nozzle coupling unit 400 is located at an upper side of the first handle member 181 located at the left side. Accordingly, the first handle member 181 extends short as compared with the second handle member 182, which is described above.

In an embodiment in which the nozzle coupling unit 400 is at least partially exposed to the outside of the outer frame 100, a component for fluidically connecting the gas separating system (not shown) to the outside may be easily coupled to the nozzle coupling unit 400. That is, in the embodiment, the nozzle coupling unit 400 is always connected fluidically to the gas separating system (not shown) accommodated inside the outer frame 100, and may be selectively connected fluidically to the outside.

Therefore, the container 10 of the gas separating system and the gas separating system (not shown) accommodated therein may be easily moved merely when the fluidical connection between the nozzle coupling unit 400 and the outside is released. In addition, when the container 10 of the gas separating system and the gas separating system (not shown) accommodated therein are arranged at a desired position, the gas separating system (not shown) may be easily connected fluidically to the outside merely when the nozzle coupling unit 400 are fluidically connected to the outside.

Alternatively, the nozzle coupling unit 400 may be arranged inside the outer frame 100 not to be exposed to the outside. In the embodiment, the nozzle coupling unit 400 may be fluidically connected to the outside by a component extending even to the inside of the outer frame 100. In the embodiment, the nozzle coupling unit 400 is protected by the outer frame 100, to prevent damage of the nozzle coupling unit 400 due to an external force or an external environment.

The nozzle coupling unit 400 may be provided in plurality. The plurality of nozzle coupling units 400 are arranged at different positions, to each fluidically connect the gas separating system (not shown) to the outside. In the shown embodiment, the nozzle coupling unit 400 includes a first nozzle coupling unit 400a located at a front side and a second nozzle coupling unit 400b located at a rear side.

In an embodiment, any one of the first nozzle coupling unit 400a and the second nozzle coupling unit 400b may be coupled to components for fluidically connecting the gas separating system (not shown) to the outside when the gas separating system (not shown) is operated in a test mode.

In addition, the other of the first nozzle coupling unit 400a and the second nozzle coupling unit 400b may be coupled to components for fluidically connecting the gas separating system (not shown) to the outside when the gas separating system (not shown) is operated in an operating mode.

In another embodiment, each of the first nozzle coupling unit 400a and the second nozzle coupling unit 400b may be coupled to components for fluidically connecting the gas separating system (not shown) operated in the test mode or the operating mode to the outside.

In other words, the first nozzle coupling unit 400a and the second nozzle coupling unit 400b may be coupled to components for fluidically connecting the gas separating system (not shown) to the outside regardless of the mode in which the gas separating system (not shown) is operated.

The first nozzle coupling unit 400a and the second nozzle coupling unit 400b have different arrangement positions but have similar structures and functions. Accordingly, hereinafter, the first nozzle coupling unit 400a and the second nozzle coupling unit 400b are referred to as the nozzle coupling unit 400 in a description of the same component.

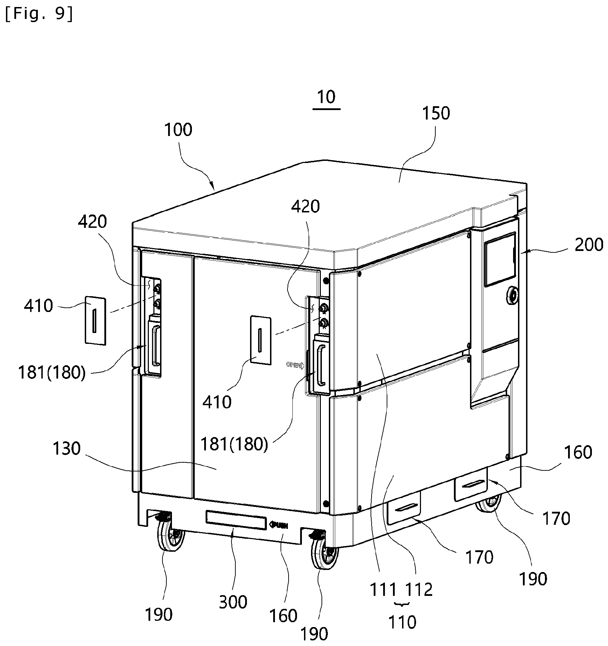

In the embodiment shown in FIGS. 9 to 11, 17, and 18, the nozzle coupling unit 400 includes a nozzle coupling cover 410, a nozzle coupling space 420, a nozzle member 430, and a nozzle support member 440.

The nozzle coupling cover 410 is configured to cover the nozzle member 430 provided in the nozzle coupling unit 400 and the nozzle coupling space 420 accommodating the nozzle member 430. The nozzle coupling cover 410 is removably coupled to the outer frame 100. When the nozzle coupling cover 410 is coupled to the outer frame 100, the nozzle coupling space 420 and the nozzle member 430 accommodated therein are not exposed to the outside.

Accordingly, when the gas separating system (not shown) is not used, damage of the nozzle member 430 can be prevented.

The nozzle coupling cover 410 may have a shape corresponding to a shape of the nozzle coupling space 420. In the shown embodiment, the nozzle coupling cover 410 is formed in plate shape having a quadrangular section and a left-right thickness, and includes a handle portion protruding to be held.

The nozzle coupling cover 410 has an arbitrary shape and may be removably coupled to the outer frame 100. In an embodiment, the nozzle coupling cover 410 includes a magnet member, thereby being removably coupled to the outer frame 10 by a magnetic force.

The nozzle coupling space 420 is a space accommodating the nozzle member 430. The nozzle coupling space 420 is formed to be recessed in an outer surface of the outer frame 100. In other words, the nozzle coupling space 420 is defined by being surrounded by the first outer frame 110 and the third outer frame 130, and is formed to be recessed as compared with the first and third outer frames 110 and 130.

The nozzle coupling space 420 may accommodate a plurality of nozzle members 430. The plurality of nozzle members 430 may be arranged in the nozzle coupling space 420 to be spaced apart from each other.

The nozzle coupling space 420 may be covered or opened by the nozzle coupling cover 410. As described above, when the gas separating system (not shown) is not operated, the nozzle coupling space 420 may be closed by being covered by the nozzle coupling cover 410. When the gas separating system (not shown) is operated, the nozzle coupling space 420 may be opened as the nozzle coupling cover 410 is removed.

The nozzle coupling space 420 may have a shape corresponding to the shape of the nozzle coupling cover 410. In the shown embodiment, the nozzle coupling space 420 is formed as a space having a polygonal pillar shape with a quadrangular section and a left-right length.

The nozzle member 430 is fluidically connected to each of the outside and the gas separating system (not shown). In other words, the nozzle member 430 fluidically connects the gas separating system (not shown) to the outside. As the nozzle member 430 is provided, fluidical connection between the outside and the gas separating system (not shown) can be simplified.

A portion of the nozzle member 430 is exposed to an outer side of the outer frame 100. In addition, another portion of the nozzle member 430 is located at an inner side of the outer frame 100. The portion of the nozzle 430 may be fluidically connected to another external component, e.g., a container (not shown) accommodating a mixed gas. The another portion of the nozzle member 430 may be fluidically connected to the gas separating system (not shown).

The nozzle member 430 is located in the nozzle coupling space 420. The nozzle member 430 may be exposed to the outside by the nozzle coupling cover 410, or exposure of the nozzle member 430 may be blocked by the nozzle coupling cover 410.

The nozzle member 430 is coupled to the nozzle support member 440. The nozzle member 430 may be supported by the nozzle support member 440.

The nozzle member 430 may have an arbitrary shape capable of fluidically connecting the gas separating system (not shown) to the outside. In the shown embodiment, the nozzle member 430 has the shape of a pipe having a hollow formed therein and having a left-right length.

The nozzle member 430 may be provided in plurality. The plurality of nozzle members 430 may be located in the nozzle coupling space 420 to be spaced apart from each other. Each of the plurality of nozzle members 420 may be fluidically connected to the outside and a component of the gas separating system (not shown).

In the shown embodiment, four nozzle members 430 is provided in each of the first nozzle coupling unit 400a and the second nozzle coupling unit 400b, to be spaced apart from each other in a front-rear direction and an up-down direction.

The nozzle support member 440 supports the nozzle member 430. The nozzle support member 440 is located inside the outer frame 100, not to be arbitrarily exposed to the outside. As the nozzle support member 440 is located inside the outer frame 100, the nozzle member 430 can be stably supported, and the gas separating system (not show) can be formed to have a beautiful appearance.

The nozzle support member 440 may be located in the inner surface of the third outer frame 130. In the shown embodiment, the nozzle support member 440 is located at an upper side of the inner surface of the third outer frame 130. The position of the nozzle support member 440 may be changed corresponding to the position of the nozzle member 430.

An inner end portion of the nozzle member 430 supported by the nozzle support member 440, i.e., a right end portion in the shown embodiment may be exposed to the inside of the outer frame 100. The gas separating system (not shown) may be fluidically connected to the inner end portion of the nozzle member 430.

The inner frame 500 partitions the space formed inside the outer frame 100. In addition, the inner frame 500 may be defined as a portion of the partitioned space. The inner frame 500 accommodates components of the gas separating system (not shown).

The inner frame 500 is coupled to the outer frame 100. The inner frame 500 is located inside the outer frame 100.

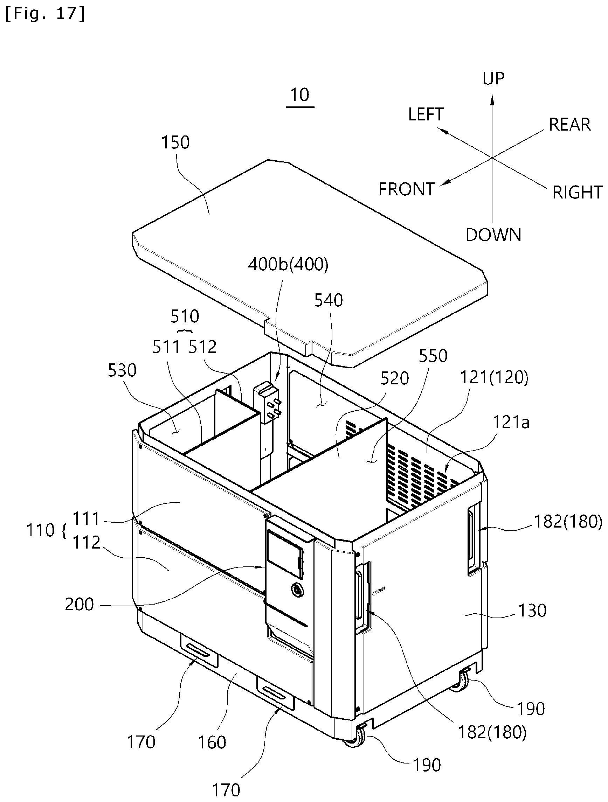

In the embodiment shown in FIGS. 17 to 20, the inner frame 500 includes a first inner frame partition wall 510, a second inner frame partition wall 520, the first frame space 530, a second frame space 540, and a third frame space 550.

The first inner frame partition wall 510 at least partially partitions the space formed inside the outer frame 100. The first inner frame partition wall 510 is configured to physically partition the first nozzle coupling unit 400a from other components.

In the shown embodiment, the first inner frame partition wall 510 partitions the first frame space 530 and the second frame space 540. The first inner frame partition wall 510 along with the first outer frame 110, the third outer frame 130, the fifth outer frame 150, and the sixth outer frame 160 surrounds the first frame space 530. In the shown embodiment, the first inner frame partition wall 510 surrounds rear and right sides of the first frame space 530.

The first inner frame partition wall 510 surrounds the first nozzle coupling unit 400a located in the first frame space 530. Therefore, the first nozzle coupling unit 400a may be physically partitioned from the second frame space 540 and the third frame space 550, in which other components of the gas separating system (not shown) are arranged. As a result, the first nozzle coupling unit 400a is not influenced by moisture or heat, generated in the second frame space 540 or the third frame space 550.

The first inner frame partition wall 510 may be divided into a plurality of portions along an extension direction thereof. In the shown embodiment, the first inner frame partition wall 510 includes a widthwise partition wall 511 that is continued to an inner surface of the first outer frame 110 and extends in the front-rear direction, and a lengthwise partition wall 512 that is continued to each of the inner surface of the third outer frame 130 and the widthwise partition wall 511.

A through-hole (not shown) through which piping fluidically connecting the collection tank T and a collection cylinder C passes may be formed in any one of the widthwise partition wall 511 and the lengthwise partition wall 512.

As the first inner frame partition wall 510 is formed, although the third outer frame 130 is moved, only the first frame space 530 is exposed to the outside, and the second frame space 540 and the third frame space 550 may not be exposed to the outside.

Therefore, only the collection tank T may be loaded in and out in a state in which other components of the gas separating system (not shown) are not exposed to the outside. Furthermore, the temperature of the second frame space 540 not exposed to the outside may be constantly maintained.

The second inner frame partition wall 520 is located to be spaced apart from the first inner frame partition wall 510.

The second inner frame partition wall 520 at least partially partitions the space formed inside the outer frame 100. The second inner frame partition wall 520 is configured to physically partition the second nozzle coupling unit 400b from other components.

In the shown embodiment, the second inner frame partition wall 520 partitions the second frame space 540 and the third frame space 550. The second inner frame partition wall 520 along with the first to third outer frames 110, 120, and 130, the fifth outer frame 150, and the sixth outer frame 160 surrounds the second frame space 540. In the shown embodiment, the second inner frame partition wall 520 surrounds a right side of the second frame space 540.

In addition, the second inner frame partition wall 520 along with the first outer frame 110, the second outer frame 120, and the fourth to sixth outer frames 140, 150, and 160 surrounds the third frame space 550. In the shown embodiment, the second inner frame partition wall 520 surrounds a left side of the third frame space 550.

Therefore, it will be understood that the second inner frame partition wall 520 partitions the second frame space 540 and the third frame space 550.

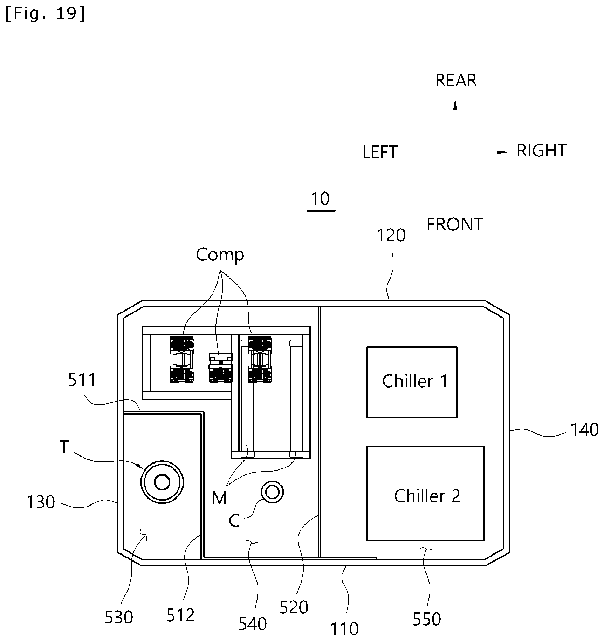

The second inner frame partition wall 520 surrounds the second nozzle coupling unit 400b located in the second frame space 540. In addition, the second inner frame partition wall 520 surrounds a compressor Comp, a membrane member M, and the collection cylinder C, which are located in the second frame space 540 (see FIGS. 19 and 20).

Accordingly, the compressor Comp, the membrane member M, and the collection cylinder C are thermally isolated from other components accommodated in the first frame space 530 and the third frame space 550, not to be influenced by moisture or heat, generated in the other components.

To this end, each of the first inner frame partition wall 510 and the second inner frame partition wall 520 may be made of a heat insulating and non-conductive material.

Meanwhile, an opening at least partially communicating with the second frame space 540 and the third frame space 550 may be formed in the second inner frame partition wall 520. The opening is formed while penetrating the second inner frame partition wall 520, to form a passage through which heat generated in the second frame space 540 is discharged to the third frame space 550.

The first frame space 530 constitutes a portion of an inner space of the outer frame 100, partitioned by the inner frame 500. The first frame space 530 is located adjacent to the third outer frame 130. In the shown embodiment, the first frame space 530 is located at a leftmost side.

The first frame space 530 is defined by being surrounded by the first, third, fifth, and sixth outer frames 110, 130, 150, and 160 and the first inner frame partition wall 510. The first frame space 530 accommodates the first nozzle coupling unit 400a. In addition, the first frame space 530 accommodates the collection tank T that stores a fluid collected in the collection cylinder C (see FIGS. 19 and 20). As described above, a weight sensing unit (not shown) for sensing a weight of the collection tank T and gas collected therein may be further provided in the first frame space 530.

The first frame space 530 may be physically and thermally partitioned from the second frame space 540 by the first inner frame partition wall 510. Therefore, the first nozzle coupling unit 400a and the collection tank T, which are accommodated in the first frame space 530, may be physically and thermally separated from other components.

The second frame space 540 constitutes another portion of the inner space of the outer frame 100, partitioned by the inner frame 500. The second frame space 540 is located between the first frame space 530 and the third frame space 550. In the shown embodiment, the second frame space 540 is located in a middle portion between the first frame space 530 and the third frame space 540.

The second frame space 540 is defined by being surrounded by the first to third outer frames 110, 120, and 130, the fifth and the sixth frames 150 and 160, and the first and second inner frame partition walls 510 and 520. The second frame space 540 accommodates the compressor Comp, the membrane member M, and the collection cylinder C (see FIGS. 19 and 20).

The compressor Comp may be located at a lower side as compared with other components. This results from that, in the case of the compressor Comp, vibration generated during an operation of the compressor Comp is large as compared with other components. A component, e.g., a rubber pad or the like for reducing the vibration generated in the compressor Comp may be provided on a surface surrounding the second frame space 540 at a lower side, i.e., the upper surface of the sixth outer frame 160.

The second frame space 540 may be physically and thermally partitioned from the first frame space 530 by the first inner frame partition wall 510. In addition, the second frame space 540 may be physically and thermally partitioned from the third frame space 550 by the second inner frame partition wall 520. Therefore, the compressor Comp, the membrane member M, and the collection cylinder C, which are accommodated in the second frame space 540, may be physically and thermally separated from other components.

A component for temperature control, e.g., a cooler, a heater or the like may be located in the second frame space 540.

In addition, a portion of the heat generated in the second frame space 540 may be discharged to the third frame space 550 through the opening formed in the second inner frame partition wall 520. Another portion of the heat generated in the second frame space 540 may be discharged to the outside through the exhaust communication holes 121a and 122a formed in the second outer frame 120.

Thus, the second frame space 540 can be maintained at a constant temperature by the above-described component for temperature control, and the generated heat can be discharged through various routines. Accordingly, the second frame space 540 can be maintained at an appropriate temperature during operations of the compressor Comp, the membrane member M, and the collection cylinder C, which are arranged therein.

The third frame space 550 constitutes the other portion of the inner space of the outer frame 100, partitioned by the inner frame 500. The third frame space 550 is located adjacent to the fourth outer frame 140 at a rightmost side.

The third frame space 550 is defined by being surrounded by the first and second outer frames 110 and 120, the fourth to sixth frames 140, 150, and 150, and the second inner frame partition wall 520. The third frame space 550 accommodates a first chiller Chiller 1 and a second chiller Chiller 2 (see FIGS. 19 and 20). The first chiller Chiller 1 may be configured to cool the membrane member M, using an air cooling method. The second chiller Chiller 2 may be configured to cool the collection tank T, using a water cooling method.

The third frame space 550 may be physically and thermally partitioned from the second frame space 540 by the second inner frame partition wall 520. Therefore, the compressor Comp and the chillers, which are accommodated in the third frame space 550, may be physically and thermally separated from other components.

In addition, components for operating and controlling the gas separating system (not shown), such as a PLC and a power supply, may be accommodated in the third frame space 550.

As described above, the heat generated in the second frame space 540 may be introduced into the third frame space 550. The heat introduced into the third frame space 550 may be discharged to the outside through the exhaust communication holes 121a and 122a formed in the second outer frame 120.

In an embodiment not shown, only the second inner frame partition wall 520 may be provided without the first inner frame partition wall 510. In the embodiment, the first frame space 530 and the second frame space 540 may be maintained in a state in which the first frame space 530 and the second frame space 540 communicate with each other, and the third frame space 550 may be partitioned from the first and second frame spaces 530 and 540 by the second inner frame partition wall 520.

Accordingly, the container 10 of the gas separating system according to the embodiment of the present disclosure can accommodate the gas separating system (not shown) to be fluidically connectable to the outside. The container 10 of the gas separating system is movably provided, to be easily movable to an arbitrary position at which gas separating work is required. Furthermore, the container 10 of the gas separating system accommodates components of the gas separating system (not shown) to be physically and thermally partitioned from each other, thereby maximizing gas separation efficiency.

Although the exemplary embodiments of the present disclosure have been described above, the spirit of the present disclosure is not limited to the exemplary embodiments presented in the present specification, and those skilled in the art who understand the spirit of the present disclosure may easily suggest other exemplary embodiments by changing, modifying, deleting or adding components within the scope of the same spirit, but this will also fall within the scope of the present disclosure.
10: container of gas separating system 100: outer frame
110: first outer frame 111: first panel frame
112: second panel frame 120: second outer frame
121: first exhaust frame 121a: first exhaust communication hole
122: second exhaust frame 122a: second exhaust communication hole
130: third outer frame 140: fourth outer frame
150: fifth outer frame 160: sixth outer frame
161: scale accommodation opening 170: pull-up coupling unit
171: pull-up member coupling space 172: pull-up cover
180: handle member 181:first handle member
182: second handle member 190: wheel member
200: control information input unit 210: control panel
211: control panel cover 212: control panel screen
220: emergency button 230: emergency button housing
300: weight sensing unit 310: scale member
311: mounting space 312: moving slide member
320: scale support frame 321: support slide member
330: support member 400: nozzle coupling unit
400a: first nozzle coupling unit 400b: second nozzle coupling unit
410: nozzle coupling cover 420: nozzle coupling space
430: nozzle member 440: nozzle support member
500: inner frame 510: first inner frame partition wall
511: widthwise partition wall 512: lengthwise partition wall
520: second inner frame partition wall 530: first frame space
540: second frame space 550: third frame space
T: collection tank C: collection cylinder
M: membrane member P: pump
Comp: compressor Chiller: chiller

## Claims

1. A container of a gas separating system, comprising:
an outer frame having a space formed thereinside;
a weight sensing unit accommodated in the outer frame to be drawable; and
a nozzle coupling unit arranged in the outer frame and fluidically connected to each of an outside and the space of the outer frame.

2. The container of claim 1, wherein the outer frame comprises a lower outer frame constituting one side of a height direction thereof, accommodating the weight sensing unit to be drawable, and formed to have a length of one direction thereof and a width of another direction thereof, and
wherein the weight sensing unit is located at one side of the one direction of the lower outer frame and is accommodated in the lower outer frame to be drawable along the one direction.

3. The container of claim 2, wherein the outer frame comprises a pull-up coupling unit located in the another direction of the lower outer frame.

4. The container of claim 3, wherein the pull-up coupling unit comprises:
a pull-up member coupling space formed inside the lower outer frame along the another direction to penetrate the lower outer frame; and
a pull-up cover covering the pull-up member coupling space and removably coupled to the lower outer frame.

5. The container of claim 2, wherein the outer frame comprises a handle member located in the one direction.

6. The container of claim 2, comprising a wheel member coupled to the lower outer frame and configured to be movable.

7. The container of claim 1, wherein the weight sensing unit is hinge-fitted to the outer frame, to be movably provided between a first position adjacent to the outer frame and a second position more distant from the outer frame than the first position.

8. The container of claim 1, comprising a control information input unit coupled to the outer frame and configured to receive a control signal from the outside,
wherein the control information input unit comprises:
a control panel receiving the control signal from the outside; and
an emergency button located adjacent to the control panel and receiving a control signal for stopping.

9. The container of claim 8, wherein the emergency button is formed to further protrude than the control panel, and
wherein the control information input unit comprises an emergency housing extending while surrounding the emergency button at a radial outer side.

10. The container of claim 1, wherein the nozzle coupling unit comprises:
a nozzle coupling space formed to be recessed as compared with an outer surface of the outer frame;
a nozzle member extending in a length direction of the outer frame such that one end portion thereof is located in the nozzle coupling space and an opposite end portion thereof is located inside the outer frame; and
a nozzle coupling cover removably coupled to the outer frame to be configured to open or close the nozzle coupling space.

11. The container of claim 2, wherein the weight sensing unit comprises:
a scale support frame accommodated in the lower outer frame; and
a scale member movably coupled to the scale support frame, supporting a container accommodating a mixed gas to be separated, and configured to sense a weight of the container.

12. The container of claim 11, wherein the scale member is movably coupled to the scale support frame along the length direction of the outer frame, and
wherein the weight sensing unit comprises a support member located at one end portion of a length direction of the scale member, to be configured to support the one end portion of the drawn scale member.

13. The container of claim 2, comprising an inner frame located inside the outer frame and configured to partition the space of the outer frame.

14. The container of claim 13, wherein the inner frame comprises an inner frame partition wall partially partitioning the space of the outer frame.

15. The container of claim 14, wherein the inner frame comprises:
a first inner frame partition wall partially partitioning the space of the outer frame at one side;
a second inner frame partition wall located to be spaced apart from the first inner frame partition wall and partially partitioning the space of the outer frame at another side;
a first frame space defined by being surrounded by the first inner frame partition wall, and accommodating any one nozzle coupling unit among a plurality of nozzle coupling units;
a second frame space defined by being surrounded by the first inner frame partition wall and the second inner frame partition wall, and accommodating another nozzle coupling unit among the plurality of nozzle coupling units; and
a third frame space defined by being surrounded by the second inner frame partition wall.

16. The container of claim 15, wherein the second frame space accommodates at least one of a pump, a membrane member, and a collection cylinder, which are provided in the gas separating system, and
wherein the third frame space accommodates a chiller provided in the gas separating system.

17. The container of claim 15, comprising a collection weight sensing unit located in the first frame space, supporting, at a lower side, a collection tank collecting a gas separated from the mixed gas to be separated, and configured to sense a weight of the gas collected in the collection tank.

18. The container of claim 14, wherein the inner frame partition wall is made of a heat insulating material.
